Europäisches Patentamt

European Patent Office

Office européen des brevets

(11) Veröffentlichungsnummer : **0 090 250**
**B1**

(12) **EUROPÄISCHE PATENTSCHRIFT**

(45) Veröffentlichungstag der Patentschrift :
10.09.86

(21) Anmeldenummer : 83102504.4

(22) Anmeldetag : 14.03.83

(51) Int. Cl.⁴ : **F 24 F 13/00, B 60 H 1/00**

(54) **Schieberregler.**

(30) Priorität : **26.03.82 DE 3211271**

(43) Veröffentlichungstag der Anmeldung :
**05.10.83 Patentblatt 83/40**

(45) Bekanntmachung des Hinweises auf die Patenterteilung : **10.09.86 Patentblatt 86/37**

(84) Benannte Vertragsstaaten :
**AT BE CH DE FR GB IT LI LU NL SE**

(56) Entgegenhaltungen :
**FR-A- 2 220 829**
**FR-A- 2 299 676**

(73) Patentinhaber : **Siemens Aktiengesellschaft Berlin
und München**
**Wittelsbacherplatz 2**
**D-8000 München 2 (DE)**

(72) Erfinder : **Hildebrand, Reinhard**
**Hauptstrasse 11**
**D-8621 Redwitz (DE)**
Erfinder : **Waldmann, Bernd**
**Gries 19**
**D-8621 Redwitz (DE)**

Jouve, 18, rue St-Denis, 75001 Paris, France

## Beschreibung

Die Erfindung betrifft einen Schieberregler mit einem in einem Schlitz an einem Grundkörper geführten Betätigungshebel für Heizungs- und Klimaanlagen in Kraftfahrzeugen mit einer Lichtquelle im Grundkörper.

Bislang wird das Austreten von Fremdlicht an Betätigungsvorrichtungen für beispielsweise Belüftung und Heizung in Kraftfahrzeugen und Klimaanlagen durch direkte Abdeckung des Leuchtkörpers unterbunden. Der Leuchtkörper ist deshalb mit zusätzlichen Teilen abgedeckt oder bedampft. Der Blick in den Innenraum ist noch frei. Vielfach stört auch ein solches Design.

Aus der FR-A-22 99 676 ist eine Symbolsteuerung und -beleuchtung bekannt. Zur Sichtbarmachung von beleuchteten Symbolen sind zwischen der Lichtquelle und der Scheibe Filter dazwischengeschaltet, welche durch einen semitransparenten, gekrümmten Materialstreifen gebildet sind. Es soll die Beleuchtung bzw. Färbung oder Markierung der Scheibe ermöglicht werden.

Der Erfindung liegt die Aufgabe zugrunde, das Austreten von Fremdlicht in Schieberregler in Heizungs- und Lüftungsbetätigungselementen in Klimaanlagen von Kraftfahrzeugen zu verhindern. Darüber hinaus soll auch noch eine Verschmutzung, insbesondere Verstaubung, des inneren Aufbaus verringert werden.

Diese Aufgabe wird bei einem Gerät der eingangs genannten Art erfindungsgemäß mit einem Band dadurch gelöst, daß ein über die Länge des Schlitzes reichendes Band geradlinig und parallel zum Schlitz verlaufend und diesen abdeckend mit beiden Enden im Grundkörper befestigt ist, wobei das Band durch einen Durchbruch im Betätigungshebel umschlossen und geführt ist. Das Band deckt den Schlitz ab. Die Führung erfolgt vorzugsweise durch eine Freisparung im Betätigungshebel. Man erhält bei verbessertem Design keinen Austritt von Fremdlicht aus dem Innern. Gleichzeitig wird eine Verunreinigung des Innenraumes verringert.

Die erfindungsgemäße Vorrichtung eignet sich ganz allgemein zum Abdecken von Schlitzen in Betätigungselementen und wird in Schieberreglern für Heizung und Lüftung in Klimaanlagen von Kraftfahrzeugen eingesetzt.

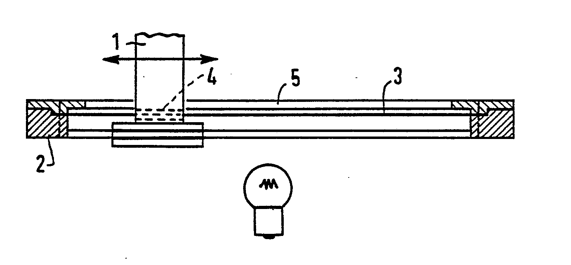

Im folgenden wird die Erfindung anhand einer Zeichnung näher erläutert. Bei einer Ausführung gemäß der Figur ist das Band 3 mit seinen beiden Enden starr mit dem Grundkörper 2 verbunden. Bei Verschieben des Betätigungshebels 1 gleitet das Band 3 durch den Durchbruch 4.

## Patentanspruch

Schieberregler mit einem in einem Schlitz (5) an einem Grundkörper (2) geführten Betätigungshebel (1) für Heizungs- und Klimaanlagen in Kraftfahrzeugen mit einer Lichtquelle im Grundkörper (2), dadurch gekennzeichnet, daß ein über die Länge des Schlitzes (5) reichendes Band (3) geradlinig und parallel zum Schlitz (5) verlaufend und diesen abdeckend mit beiden Enden im Grundkörper (2) befestigt ist, wobei das Band (3) durch einen Durchbruch (4) im Betätigungshebel (1) umschlossen und geführt ist.

## Claim

A sliding control knob comprising an operating lever (1), which is guided in a slot (5) on a basic body (2), for heating and ventilating systems in motor vehicles, with a light source in the basic body (2), characterised in that a strip (3) extending over the length of the slot (5) has both ends fixed in the basic body (2) so as to run in a straight line and parallel to the slot (5) and to cover said slot, the strip (3) being surrounded by and guided through an opening (4) in the operating lever (1).

## Revendication

Régulateur à curseur comprenant un levier de manœuvre (1) guidé dans une fente (5) d'un corps de base (2), pour des installations de chauffage et de conditionnement d'air de véhicules automobiles, avec une source lumineuse dans le corps de base (2), caractérisé en ce qu'un ruban (3) s'étendant sur la longueur de la fente (5), en étant rectiligne et parallèle à la fente (5) et en la recouvrant, est fixé par les deux extrémités au corps de base (2), le ruban (3) étant entouré et étant guidé par un passage (4) ménagé dans le levier de manœuvre (1).